# FASCICULE DE BREVET EUROPEEN

(11) **EP 0 395 459 B1**
(45) Date de publication et mention de la délivrance du brevet: **07.07.1993**
(21) Numéro de dépôt: 90400826.5
(22) Date de dépôt: 27.03.1990
(51) Int. Cl.: B64C 1/22

(54) **Appareil autonome d'embarquement et de débarquement de charges, intégré à un aéronef**
Autonome Frachtlade- und Frachtausladevorrichtung, die in einem Flugzeug integriert ist
Self-contained freight loading and unloading device integrated in an aircraft

(30) Priorité: 21.04.1989 FR 8905329
(43) Date de publication de la demande: 31.10.1990
(73) Titulaire: AEROSPATIALE Société Nationale Industrielle, 75781 Paris Cédex 16 (FR)
(72) Inventeur: Dalbera, Jacques Maurice, F-33120 Arcachon (FR)
(74) Mandataire: Barnay, André François

(56) Documents cités:
- US-A- 3 478 904

## Description

La présente invention est relative à un appareil de chargement de marchandises dans un aéronef comportant une porte latérale.

Les marchandises transportées par les aéronefs sont habituellement conditionnées en palettes ou en conteneurs, et les opérations de chargement nécessitent un appareil élévateur spécialisé adapté pour saisir les palettes ou conteneurs et les élever jusqu'à la hauteur de la soute, des moyens devant alors entrer en action pour pousser ou tirer la charge dans la soute à partir de l'appareil élévateur.

Dans un but de simplification, on utilisera dans la suite de la présente description le terme général de "charge" pour désigner la charge matérielle d'un aéronef, ce terme devant être entendu dans son sens le plus large, quel que soit le conditionnement de cette charge.

De par sa nature même, l'appareillage utilisé sur les aéroports pour le chargement et le déchargement des aéronefs est particulièrement coûteux. De plus certains aéroports secondaires, ou des pays en voie de développement, ne sont pas encore équipés de ces appareils.

Il existe donc un besoin d'un matériel conçu pour être intégré à un aéronef et pour permettre aussi bien son chargement que son déchargement, et ce sans nécessiter l'aide de moyens spécifiques extérieurs.

Le document US-A-3.478.904 propose un appareil autonome, intégré à un aéronef, capable d'assurer seul l'embarquement et le débarquement des charges, sur des terrains dépourvus de moyens spécialisés.

Ce document propose un appareil autonome d'embarquement et de débarquement de charges pour aéronef du type comportant des moyens de roulement s'étendant longitudinalement dans la soute de part et d'autre d'un plateau à billes destiné à recevoir les charges au droit d'une porte latérale, un chemin de roulement repliable, des moyens pour déplacer ledit chemin de roulement d'une première position repliée de stockage à l'intérieur de la soute au droit de ladite porte, dans une seconde position, entièrement extérieure, dans laquelle il est articulé par une extrémité sur le seuil de la porte, et inversement, le plateau à billes étant mobile et comportant des moyens de guidage dans lesquels coulisse ledit chemin de roulement, des moyens pour abaisser et relever le chemin de roulement dans sa seconde position, et des moyens de traction reliés au plateau à billes.

On constate toutefois qu'une telle conception ne permet pas que le chemin de roulement, dans sa position repliée, soit plus long que la hauteur de l'ouverture correspondant à la porte latérale de la soute et qui ne permet donc pas l'usage de chemins de roulement relativement longs dans des avions avec une soute relativement basse et une porte de chargement basse sous le plancher principal de l'avion.

Afin de remédier à ces inconvénients, l'invention propose un appareil du type mentionné précédemment, caractérisé en ce qu'il comporte des moyens pour déplacer le chemin de roulement transversalement à la soute en synchronisme avec l'ouverture de la porte, la seconde position du chemin de roulement étant une position repliée.

Suivant une caractéristique préférée de l'invention, ledit chemin de roulement comprend deux parties à peu près égales articulées ensemble bout à bout, dont la longueur correspond à la largeur du plancher de la soute au droit de ladite porte.

Suivant un mode de réalisation, lesdites parties du chemin de roulement sont constituées chacune par deux bras parallèles comportant des galets de roulement sur leurs faces en regard.

D'une façon avantageuse, les moyens de guidage dans lesquels coulisse le chemin de roulement sont constitués par des rails en section en C montés latéralement sur le plateau à billes mobile, recevant lesdits galets et maintenant ainsi l'écartement desdits bras.

Selon encore une autre caractéristique de l'invention, les moyens pour déplacer le chemin de roulement de sa première à sa seconde position en synchronisme avec l'ouverture de la porte, et inversement, comprennent au moins une barre rigide articulée par une extrémité sur la partie inférieure de la porte et par son extrémité opposée sur ladite extrémité du chemin de roulement qui est articulée sur le seuil de la porte dans sa seconde position.

De préférence, le dispositif d'abaissement et de relevage comprend un treuil à l'intérieur de la soute, adapté pour dérouler et enrouler un câble relié audit chemin de roulement, au voisinage de l'articulation de ses deux parties.

De façon commode, le dispositif de traction du plateau à billes est un treuil à câble.

La description qui va suivre, en regard des dessins annexés à titre d'exemples non limitatifs, permettra de bien comprendre comment l'invention peut être mise en pratique.

La figure 1 est une vue schématique de l'appareil suivant l'invention, montrant différentes positions du chemin de roulement.

Les figures 2 à 4 sont des vues schématiques illustrant le fonctionnement de l'appareil.

La figure 5 est une vue partielle en plan de l'appareil.

La figure 6 est une vue partielle en coupe suivant la ligne A-A de la figure 5.

La figure 7 est une vue en coupe montrant le plateau à billes en position de stockage, avec la porte de la soute en position de fermeture.

La figure 8 est une vue partielle montrant l'articulation du chemin de roulement sur le seuil de la porte de la soute, dans sa seconde position.

La figure 9 montre une autre possibilité d'utilisation de l'appareil.

En se référant aux dessins, l'appareil comprend un chemin de roulement articulé repliable désigné dans son ensemble par la référence 1 et comprenant deux parties 2, 3 articulées bout à bout autour d'un axe 4.

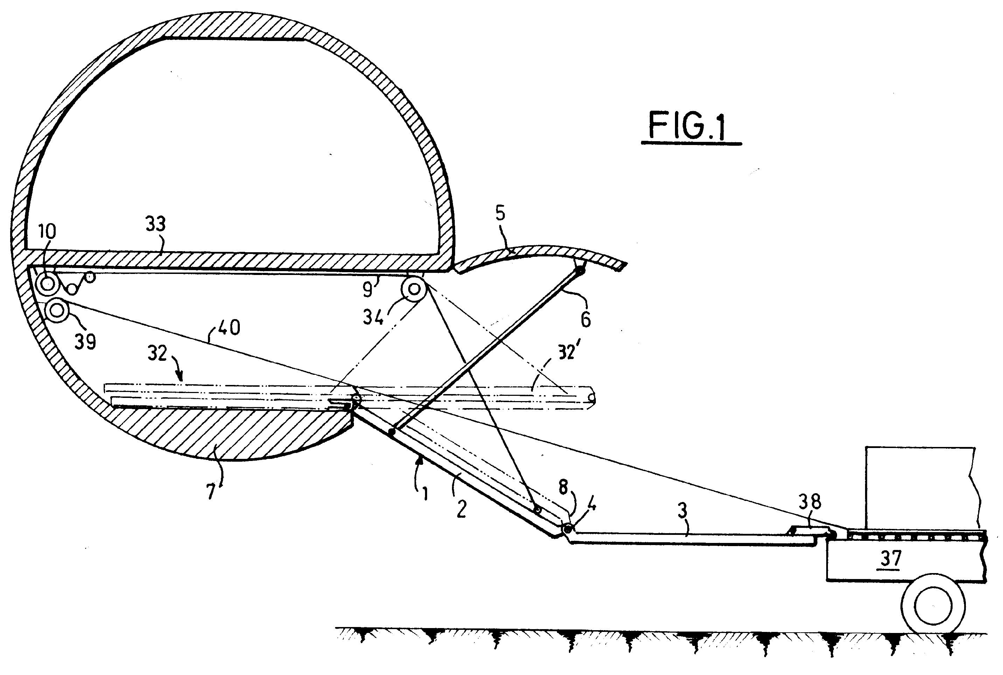

En se référant à la figure 1, qui montre l'appareil suivant l'invention déployé en position d'utilisation, la partie 2 est, dans cette position, articulée par son extrémité opposée à l'axe 4 sur le seuil de la porte 5 et, par cette même extrémité, sur une extrémité d'au moins une barre rigide 6 dont l'autre extrémité est retenue de façon articulée libérable sur la partie inférieure de la porte 5 de la soute par des moyens qui seront décrits en détails dans la suite.

Les extrémités des parties 2 et 3 sont légèrement coudées au voisinage de l'axe d'articulation 4, afin que la partie 3 puisse être repliée sur la partie 2 parallèlement à celle-ci comme représenté en traits interrompus en 8.

Un câble de relevage 9 fixé sur la partie 2 du chemin de roulement au voisinage de l'axe d'articulation 4 s'étend vers la porte 5 à partir d'un treuil 10, le long du plafond de la soute, passe autour d'une poulie 34 au-dessus de la porte, et son extrémité est reliée à la partie 2 du chemin de roulement, au voisinage de l'axe 4.

Lorsque les deux parties 2, 3 du chemin de roulement sont repliées l'une sur l'autre et que le treuil 10 est actionné, elles sont relevées dans la position horizontale représentée en 32', et arrêtées dans cette position. La porte 5 peut alors être refermée en basculant vers le bas.

Dans ce mouvement, les barres 6 tirent les deux parties 2, 3 vers l'intérieur, la partie 2 coulissant dans des moyens de guidage, qui seront décrits dans la suite, transversalement sur le plancher 7 de la soute pour venir dans une position de stockage à l'intérieur de celle-ci. On comprend bien entendu que la longueur de chacune des parties 2 et 3 est à peu près égale à la largeur du plancher de la soute au droit de la porte.

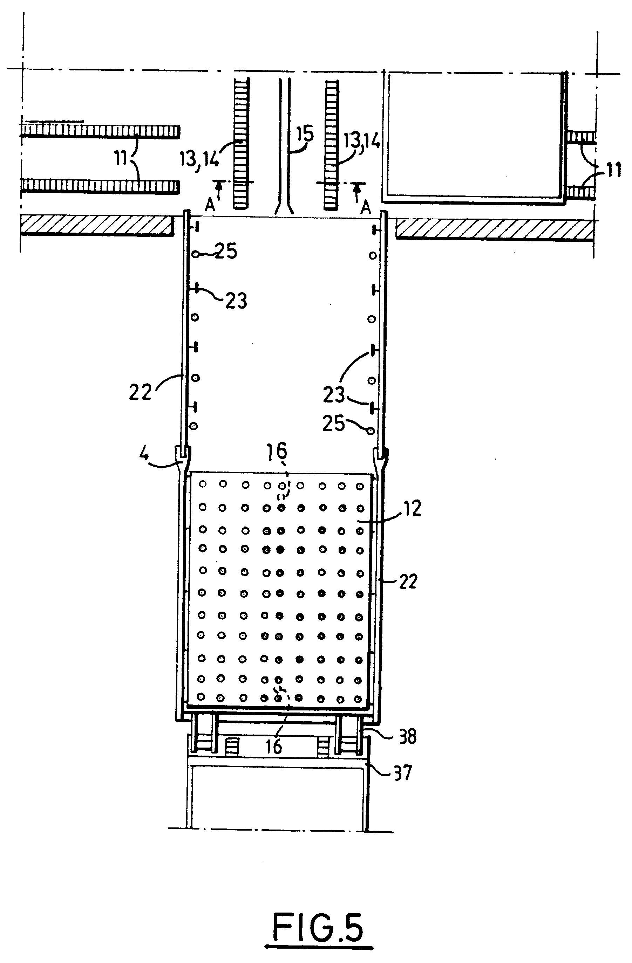

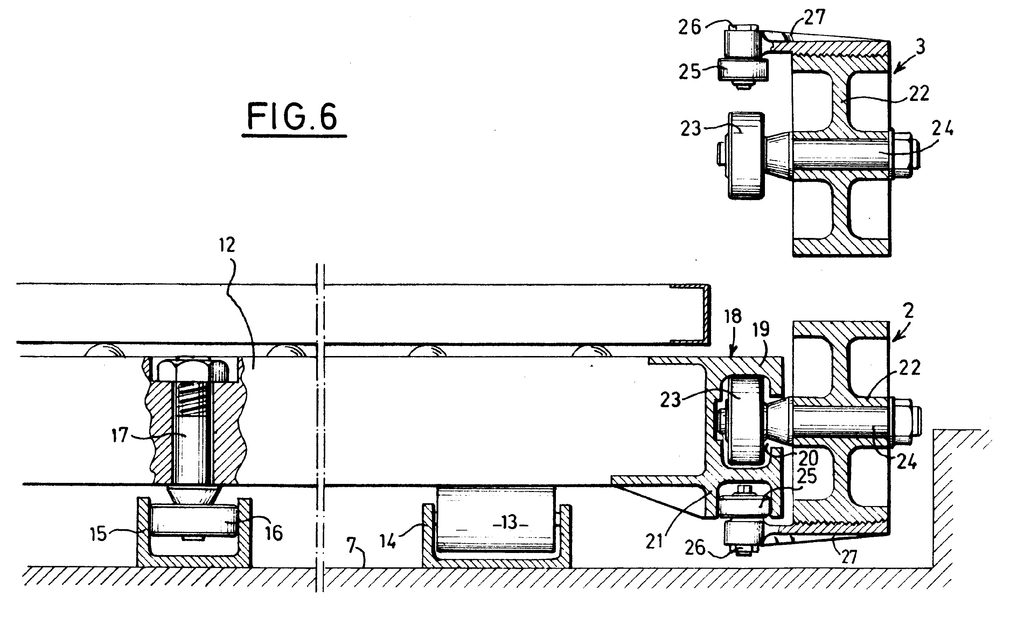

On se référera maintenant aux figures 5 et 6 pour décrire les détails particuliers de l'appareil.

La soute de l'aéronef comporte de façon connue des moyens de roulement 11 constitués par des rangées de rouleaux s'étendant longitudinalement au fuselage et sur lesquels les charges sont déplacées au fur et à mesure de leur réception sur un plateau à billes qui est habituellement fixé au droit de la porte entre deux sections des moyens de roulement 11.

Suivant l'invention le plateau à billes 12 est mobile. Dans ce but, comme représenté, il est prévu sur le plancher 7 de la soute, au droit de la porte, deux rangées parallèles de rouleaux 13 montés rotatifs dans des rails 14 en gouttières, et un rail médian 15 de section en U. Le plateau à billes 12, quant à lui, comporte sur l'axe médian de sa face inférieure deux galets 16 montés fous sur des axes verticaux 17 : on comprend que les galets 16 sont adaptés pour guider le plateau 12 dans le rail 15 lorsqu'il roule sur les rouleaux 13.

En outre, le plateau 12 comporte sur deux côtés longitudinaux des rails de guidage 18 représentés à plus grande échelle à la figure 6 et présentant chacun en section transversale et de haut en bas une première partie 19 en forme de C délimitant une fente longitudinale latérale 20, et une seconde partie 21 en U inversé, c'est-à-dire ouvert vers le bas.

Chacune des deux parties du chemin de roulement 1 est constituée par deux bras rigides parallèles 22 ayant une longueur à peu près égale à la largeur du plancher de la soute au niveau de la porte, et comportant chacun d'une part sur leurs faces en regard des galets 23 montés rotatifs autour d'axes horizontaux 24, et d'autre part des galets 25 montés rotatifs autour d'axes verticaux 26 soutenus en porte-à-faux par des supports transversaux 27 solidaires des bras 22.

L'agencement est tel que le plateau à billes 12 peut être porté sur chacun de ses côtés sur les bras 22 par les galets 23 engagés dans la partie supérieure 19 des rails 18, et guidé par les galets 25 engagés dans la partie inférieure 21. Grâce à cet agencement, lorsqu'il est engagé entre les bras 22, le plateau 12 maintient leur écartement.

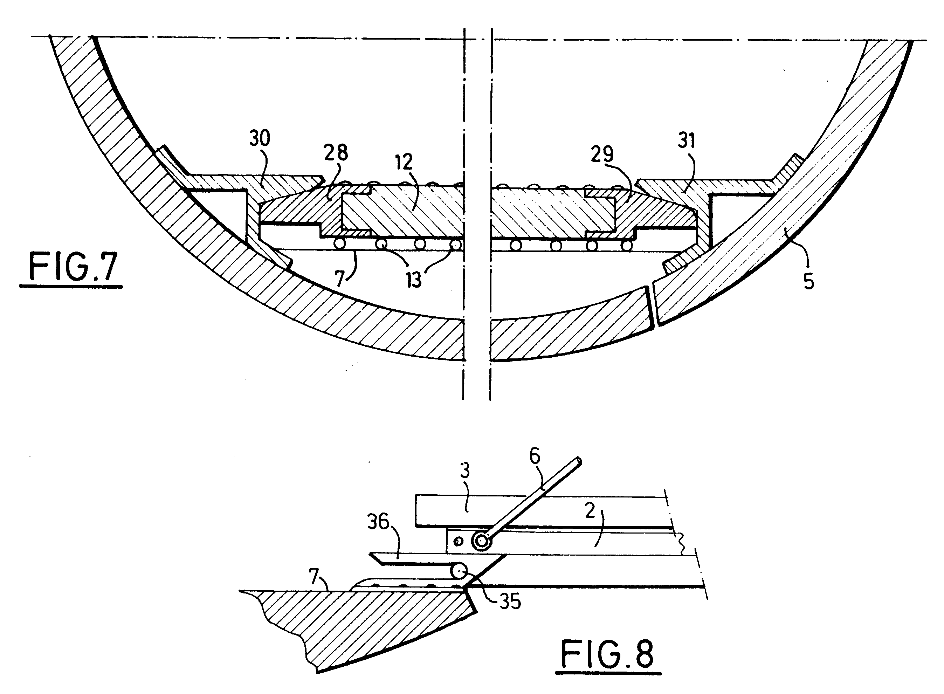

Par ailleurs, les bords avant et arrière 28, 29 respectivement du plateau 12 sont chanfreinés, comme représenté à la figure 7 afin de s'engager, en position de stockage, d'une part sous un rebord d'un organe de butée avant 30 et d'autre part sous un rebord d'un organe d'arrêt 31 monté sur la partie inférieure de la porte 5, dans la position de fermeture de celle-ci.

Enfin les moyens pour abaisser et relever le chemin de roulement comprennent en pratique deux câbles 9 fixés chacun sur un bras 22 au voisinage de l'axe 4 afin d'éviter toute torsion de l'ensemble.

On décrira maintenant le fonctionnement de l'appareil à partir de sa première position, repliée, de stockage dans la soute de l'aéronef, représentée en 32 à la figure 1, dans laquelle la partie 3 du chemin de roulement est repliée autour de l'axe 4, par-dessus la partie 2, et la porte 5 est en position de fermeture.

Dans cette position les galets 23 et 25 des bras de la partie 2 du chemin de roulement sont respectivement engagés dans les parties 19, 21 des rails latéraux 18 du plateau à billes 12 qui repose sur les rouleaux 13 et dont les galets inférieurs 16 sont engagés dans le rail 15. Le bord avant chanfreiné 28 du plateau 12 est engagé sous le rebord de la butée avant 30 qui le bloque, tandis que son bord arrière chanfreiné 29 est engagé sous le rebord de la butée arrière 31 solidaire de la porte 5. Les câbles 9 sont enroulés sur un tambour du treuil 10, s'étendent le long du plafond 33 de la soute jusqu'au bord supérieur de la porte où ils passent autour des poulies 34. Les barres 6 reliant l'extrémité de la partie 2 opposée à l'axe 4 à la partie inférieure de la porte 5 sont pratiquement alignées avec les bras 22 des parties 2 et 3 du chemin de roulement.

Lorsqu'on ouvre la porte 5 de la soute, le bord arrière du plateau est libéré et les barres 6 tirent avec elles l'ensemble formé par les deux parties du chemin de roulement et le plateau 12 disposé entre les bras de la partie 2, jusque dans la position 32' représentée à la figure 1, cet ensemble étant maintenu dans cette position par les câbles 9 du treuil 10, bloqué, l'extrémité de la partie 2 opposée à l'axe d'articulation 4 étant alors arrêtée sur le seuil de la porte par l'engagement de deux butées latérales 35 solidaires des bras 22 dans deux organes d'arrêt latéraux 36 (figure 8).

Le treuil 10 est alors actionné pour dérouler les câbles 9 jusqu'à ce que l'extrémité opposée de la partie 2, portant l'axe 4, se trouve à la hauteur d'un plateau 37 d'un véhicule transportant des charges. On déploie alors manuellement la partie 3 du chemin de roulement 1 jusqu'à ce que son extrémité repose sur le plateau 37.

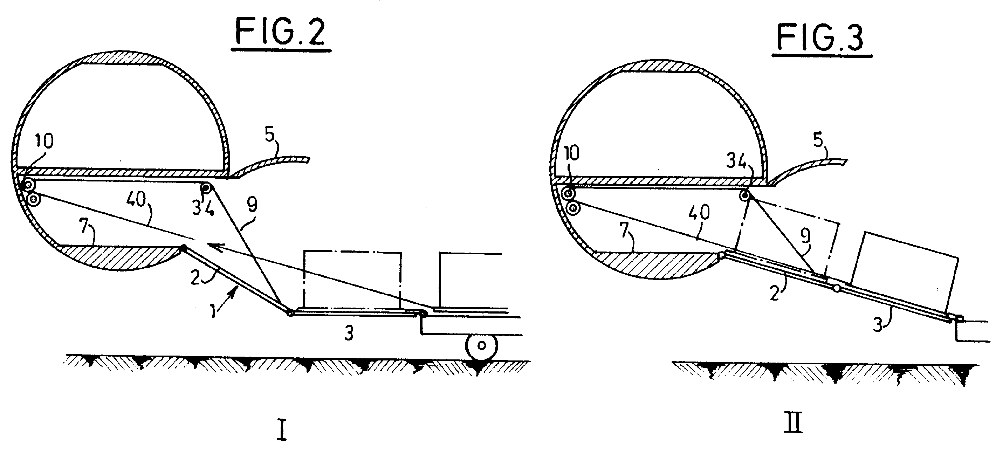

D'une façon avantageuse l'extrémité de la partie 3 opposée à l'axe 4 peut être pourvue de deux organes d'appui amovibles 38 en forme de crochets montés aux extrémités libres des bras de la partie 3 du chemin de roulement et avantageusement terminés chacun par un galet afin d'absorber les déplacements longitudinaux de l'ensemble, l'appareil se trouvant alors dans la position I représentée à la figure 2.

Le treuil 10 est alors actionné pour redresser le chemin de roulement en amenant la partie 3 dans le prolongement de la partie 2 (position II figure 3) et on laisse descendre le plateau 12 jusqu'au bord du plateau 37 en le retenant au moyen d'un câble 40, fixé sur lui et relié au tambour d'un second treuil 39.

On actionne de nouveau le treuil 10 en déroulant le câble 9 pour ramener l'ensemble dans la position I de la figure 2 dans laquelle on peut alors poser la charge sur le plateau 12 comme représenté en traits mixtes.

Le treuil 10 est alors de nouveau actionné pour remonter le chemin de roulement avec ses deux parties en alignement en position II (figure 3) et la charge est hissée jusqu'au seuil de la porte au moyen du treuil 39.

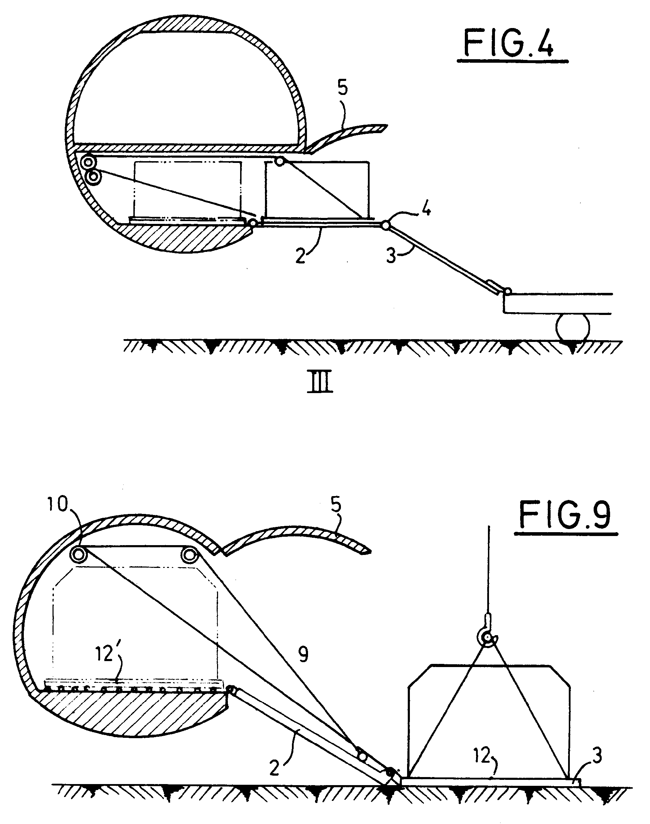

Le treuil 10, de nouveau actionné, ramène la partie 2 du chemin de roulement en position horizontale III (figure 4) et la charge est amenée à bord sur le plateau 12 quittant les bras 22 de la partie 2 et roulant sur les rouleaux 13, guidé dans le rail 15 par ses galets 16. La charge peut alors être déplacée vers l'avant ou vers l'arrière dans la soute de l'aéronef sur les moyens de roulement 11.

Les opérations décrites ci-dessus sont effectuées en sens inverse pour débarquer les charges.

Ces opérations d'embarquement, comme celles de débarquement, ne nécessitent ni installation particulière sur le terrain, ni matériel de manutention; ce qui caractérisé un système autonome.

On a représenté à la figure 9 un autre exemple d'utilisation de l'appareil suivant l'invention, dans lequel on embarque une charge amenée au moyen d'une grue. Dans ce cas, lorsque l'ensemble du chemin de roulement replié est sorti avec le plateau 12 (position 32' figure 1), il est abaissé au moyen du treuil 10 jusqu'à ce que l'extrémité de l'ensemble replié, qui comporte l'axe d'articulation 4, repose directement sur le sol, et la partie 3 du chemin de roulement est alors dépliée, à plat, également sur le sol. La suite des opérations est la même que ci-dessus.

## Revendications

1. Appareil autonome d'embarquement et de débarquement de charges pour aéronef du type comportant des moyens de roulement s'étendant longitudinalement dans la soute de part et d'autre d'un plateau à billes destiné à recevoir les charges au droit d'une porte latérale, un chemin de roulement repliable (1), des moyens (6) pour déplacer le chemin de roulement d'une première position repliée (32) de stockage à l'intérieur de la soute au droit de ladite porte, dans une seconde position, entièrement extérieure, dans laquelle il est articulé par une extrémité sur le seuil de la porte (5), et inversement, le plateau à billes (12) étant mobile et comportant des moyens de guidage (18) dans lesquels coulisse ledit chemin de roulement, des moyens (9, 10, 34) pour abaisser et relever le chemin de roulement (1) dans sa seconde position (32'), et des moyens de traction (39, 40) reliés au plateau à billes, caractérisé en ce qu'il comporte des moyens (6) pour déplacer le chemin de roulement transversalement à la soute en synchronisme avec l'ouverture de la porte (51), et en ce que la seconde position est une position repliée (32').

2. Appareil suivant la revendication 1, caractérisé en ce que ledit chemin de roulement comprend deux parties (2, 3) à peu près égales, articulées ensemble bout à bout autour d'un axe (4), dont la longueur correspond à la largeur du plancher (7) de la soute au droit de ladite porte.

3. Appareil suivant la revendication 2, caractérisé en ce que lesdites parties du chemin de roulement (1) sont constituées chacune par deux bras parallèles rigides (22).

4. Appareil suivant la revendication 3, caractérisé en ce que les bras (22) comportent des galets de roulement (23) montés sur des axes (24) perpendiculaires aux faces en regard desdits bras (22) et des galets (25) montés sur des axes parallèles auxdites faces en regard des bras.

5. Appareil suivant la revendication 1, caractérisé en ce que les moyens de guidage du plateau sont constitués par des rails (18) montés latéralement sur le plateau à billes (12) et comportant chacun une première partie de section en (C) ouverte vers l'extérieur et adaptée pour coopérer avec les galets (23) et une seconde partie de section en (U) adaptée pour coopérer avec les galets (25), maintenant ainsi l'écartement desdits bras (22).

6. Appareil suivant la revendication 1, caractérisé en ce que les moyens pour déplacer le chemin de roulement de sa première position (32) dans sa seconde position (32') en synchronisme avec l'ouverture de la porte (5), et inversement, comprennent au moins une barre rigide (6) articulée par une extrémité sur la partie inférieure de la porte (5) et par son extrémité opposée sur ladite extrémité de la partie (2) du chemin de roulement qui est articulée sur le seuil de la porte dans sa seconde position.

7. Appareil suivant la revendication 1, caractérisé en ce que les moyens pour abaisser et relever le chemin de roulement (1) comprennent un treuil (10) à l'intérieur de la soute, adapté pour dérouler et enrouler un câble (9) passant autour d'une poulie (34) situé au-dessus de la porte (5) et relié à la partie (2) dudit chemin de roulement, au voisinage de l'axe d'articulation (4) de ses deux parties.

8. Appareil suivant la revendication 1, caractérisé en ce que le dispositif de traction du plateau à billes (12) est un treuil (39) comportant un câble (40) relié au plateau à billes (12).

9. Appareil suivant l'une quelconque des revendications précédentes, caractérisé en ce qu'il comprend deux organes d'arrêt (36) sur les côtés du seuil de la porte (5), adaptés pour coopérer avec des butées (35) en saillie latérale sur l'extrémité de la partie (2) du chemin de roulement qui est opposée à l'axe d'articulation (4).

10. Appareil suivant la revendication 9, caractérisé en ce qu'il comporte, sur le plancher de la soute, au droit de la porte (5), deux rangées de rouleaux (13), de part et d'autre d'un rail de guidage (15), et s'étendant transversalement au plancher (7).

11. Appareil suivant la revendication 10, caractérisé en ce que le plateau à billes (12) comporte un galet de guidage (16) monté sur sa surface inférieure et adapté pour coopérer avec le rail de guidage (15).

## Patentansprüche

1. Autonome Frachtlade- und Frachtausladevorrichtung für Flugzeuge mit sich der Länge nach im Frachtraum beiderseits einer kugelbestückten Transportplatte (12) erstreckenden Rollenförderern, wobei die Transportplatte (12) zur Aufnahme der Fracht durch eine seitliche Tür (5) vorgesehen ist, mit einer zusammenklappbaren Rollenbahn (1), mit Mitteln, um die Rollenbahn (1) zwischen einer ersten zusammengeklappten, zur Aufbewahrung bei der Tür (5) im Inneren des Frachtraums dienenden Lage (32) und einer vollständig außerhalb gelegenen zweiten Lage (32') hin- und herzubewegen, wobei die Rollenbahn (1) in der zweiten Lage (32') am einen Ende mit der Schwelle der Tür (5) gelenkig verbunden ist, ferner mit Führungsmittel (18), die der beweglich gelagerten Transportplatte (12) zugeordnet sind und an denen die Rollenbahn (1) geführt ist, mit Mitteln (9,10,34), um die Rollenbahn (1) abzusenken oder anzuheben, wenn sie sich in ihrer zweiten Lage (32') befindet und mit mit der Transportplatte (12) verbundene Transporteinrichtungen (39,40), dadurch gekennzeichnet, daß Mittel (6) vorhanden sind, die die Rollenbahn (1) synchron mit dem Öffnen der Tür (5) quer durch den Frachtraum verschieben, und daß die zweite Lage (32') eine zusammengeklappte Lage ist.

2. Vorrichtung nach Anspruch 1, dadurch gekennzeichnet, daß die Rollenbahn (1) aus zwei beinahe gleichartigen Teilen (2,3) besteht, die durch eine Achse (4) an ihren jeweiligen Enden zusammengefügt sind, wobei die Länge der Teile (2,3) der Breite des Bodens (7) des Frachtraums an der Tür (5) entspricht.

3. Vorrichtung nach Anspruch 2, dadurch gekennzeichnet, daß die Teile (2,3) der Rollenbahn (1) jeweils durch zwei parallele, starre Transportholme (22) gebildet sind.

4. Vorrichtung nach Anspruch 3, dadurch gekennzeichnet, daß die Transportholme (22) Laufrollen (23) aufweisen, die auf Achsen (24) angeordnet sind, die senkrecht zu den einander gegenüberliegenden Seiten der Transportholme (22) stehen und Rollen (25), die auf parallel zu den genannten Seiten stehenden Achsen (26) angeordnet sind.

5. Vorrichtung nach Anspruch 1, dadurch gekennzeichnet, daß die Führungsmittel der Transportplatte (12) aus seitlich an der Transportplatte (12) angeordneten Schienen (18) gebildet sind und jede Schiene (18) einen ersten, nach außen offenen C-förmigen Abschnitt aufweist, der angepaßt ist, um mit den Laufrollen (23) zusammenzuwirken und einen zweiten U-förmigen Abschnitt aufweist, der angepaßt ist, um mit den Rollen (25) zusammenzuwirken, damit auf diese Weise die Spurweite der Transportholme (22) beibehalten wird.

6. Vorrichtung nach Anspruch 1, dadurch gekennzeichnet, daß die Mittel, die die Rollenbahn (1) synchron mit dem Öffnen der Tür (5) zwischen ihrer ersten (32) und ihrer zweiten Lage (32') hin- und herbewegen, wenigstens eine starre Stange (6) aufweisen, die mit dem einem Ende mit dem unteren Abschnitt der Tür (5) und mit dem entgegengesetzten Ende mit dem Teil der Rollenbahn (1) gelenkig verbunden ist, der in der zweiten Lage (32') der Rollenbahn (1) gelenkig mit der Schwelle der Tür (5) verbunden ist.

7. Vorrichtung nach Anspruch 1, dadurch gekennzeichnet, daß die Mittel, die die Rollenbahn (1) absenken oder anheben, eine Winde (10) im Inneren des Frachtraums aufweisen, die vorgesehen ist, um ein Kabel (9) auf- und abzurollen, das um eine unterhalb der Tür (5) gelegene Kabelrolle (34) geführt ist und in der Nähe der Gelenkachse (4) der zwei Teile (2,3) der Rollenbahn (1) mit deren einem Teil (2) verbunden ist.

8. Vorrichtung nach Anspruch 1, dadurch gekennzeichnet, daß die Transporteinrichtung der Transportplatte (12) eine Winde (39) ist, die ein mit der Transportplatte (12) verbundenes Kabel (40) aufweist.

9. Vorrichtung nach einem der Ansprüche 1 bis 8, dadurch gekennzeichnet, daß zwei Haltegabeln (36) am Rand der Schwelle der Tür (5) vorgesehen sind, die mit seitlich hervorstehenden Zapfen (35) an dem Ende des Teils (2) der Rollenbahn (1) zusammenzuwirken, das der Gelenkachse (4) gegenüberliegt.

10. Vorrichtung nach Anspruch 9, dadurch gekennzeichnet, daß sich auf dem Boden (7) des Frachtraums an der Tür (5) zwei Walzenreihen (13) befinden, die beiderseits einer Führungsschiene (15) angeordnet sind und sich quer zum Boden (7) erstrecken.

11. Vorrichtung nach Anspruch 10, dadurch gekennzeichnet, daß die Transportplatte (12) eine auf ihrer unteren Oberfläche angeordnete und zur Zusammenwirkung mit der Führungsschiene (15) vorgesehene Führungsrolle (16) aufweist.

## Claims

1. Self-contained apparatus for loading and unloading freight for aircraft of the type comprising rolling means extending longitudinally within the hold on the one hand and on the other hand a ball-carrying platform designed to receive the freight opposite a side door, a folding roller track (1), means (6) for shifting the roller track from a first folded stowage position (32) within the hold opposite the said door into a second position wholly outside, in which it is articulated by one end to the sill of the door (5), and back again, the ball platform (12) being movable and having guide means (18) in which the said roller track slides, means (9, 10, 34) for lowering and raising the roller track (1) in its second position (32') and traction means (39, 40) connected to the ball platform, characterised in that it comprises means (6) for shifting the roller track transversely in relation to the hold in synchronism with the opening of the door (51) and in that the second position is a folded position (32').

2. Apparatus according to claim 1, characterised in that the said roller track comprises two roughly equal parts (2, 3) hinged together end to end around an axis (4), of which the length corresponds to the size of the floor (7) of the hold opposite the said door.

3. Apparatus according to claim 2,characterised in that the said parts of the roller track (1) are each constituted by two parallel rigid arms (22).

4. Apparatus according to claim 3,characterised in that the arms (22) have rollers (23) mounted on axes (24) perpendicular to the mutually opposed faces of the said arms (22) and guide rollers (25) mounted on axes parallel to the said mutually opposed faces of the arms.

5. Apparatus according to claim 1, characterised in that the guide means for the platform are constituted by rails (18) mounted laterally on the ball platform (12) and each comprising a first part of C section open towards the outside and adapted to co-operate with the rollers (23) and a second part of U section adapted to co-operate with the guide rollers (25), thus, maintaining the spacing of the said arms (22).

6. Apparatus according to claim 1, characterised in that the means for shifting the roller track from its first position (32) into its second position (32') in synchronism with the opening of the door (5) and back again comprise at least one rigid strut (6) articulated by one end to the lower part of the door (5) and by its opposite end to the said end of the part (2) of the roller track which is articulated to the sill of the door in its second position.

7. Apparatus according to claim 1, characterised in that the means for lowering and raising the roller track (1) comprise a winch (10) inside the hold acting to unwind and wind up a cable (9) passing around a pulley (34) situated above the door (5) and connected to the part (2) of the said roller track in the neighbourhood of the axis of the hinge (4) joining the two parts.

8. Apparatus according to claim 1, characterised in that the means for pulling the ball platform (12) comprise a winch (39) having a cable (40) connected to the ball platform (12).

9. Apparatus according to any one of the foregoing claims characterised in that it comprises two stop members (36) at the sides of the sill of the door (5) designed to co-operate with abutments (35) projecting laterally from the end of the part (2) of the roller track opposite the hinge (4).

10. Apparatus according to claim 9, characterised in that it comprises on the floor of the hold opposite the door (5) two arrays of supporting rollers (13) on one side and the other of a guide track (15) and extending tranvsversely in relation to the floor (7).

11. Apparatus according to claim 10, characterised in that the ball platform (12) has a guide roller (16) mounted on its underside and adapted to co-operate with the guide track (15).
